# EUROPEAN PATENT APPLICATION

(11) **EP 4 484 316 A1**
(43) Date of publication of application: **01.01.2025**
(21) Application number: 24180009.3
(22) Date of filing: 04.06.2024
(51) Int. Cl.: B65D 5/06, B65D 5/42, B32B 29/00

(54) **SHEET OF PACKAGING MATERIAL TO BE FOLDED INTO A PACKAGE, ASSOCIATED METHODS AND PACKAGE**

(30) Priority: 16.06.2023 IT 202300012474
(71) Applicant: Tetra Laval Holdings & Finance S.A., 1009 Pully (CH)
(72) Inventor: BENKÖ, Gabor, 221 86 Lund (SE); JOHANSSON, Per, 221 86 Lund (SE); HALLQUIST, Jakob, 221 86 Lund (SE); ÖSTLUND, Magnus, 221 86 Lund (SE); RONCHETTI, Luca, 41123 Modena (IT); HYLEN, Tove, 221 86 Lund (SE); PAPASPIROPOULOS, Giorgos, 221 86 Lund (SE); ENGMAN, Calle, 221 86 Lund (SE); PRADELLI, Massimo, 41123 Modena (IT)
(74) Representative: Tetra Pak - Patent Attorneys SE

(57) **Abstract**

A sheet (200) of packaging material (102) arranged to be folded into a package (116) for holding a food product (FP) is presented. The packaging material (102) comprises an outer protective layer (500) arranged to face a surrounding environment, a cellulose-based layer (502) arranged to provide robustness, and an inner protective layer (504) for preventing contact between the food product (FP) and the cellulose-based layer (502). The sheet (200) comprises at least one sealing section (208, 210) arranged to be formed into a fin (312) of the package (116), wherein the sealing section (208, 210) comprises an edge area (206a-d) arranged to be formed into a peripheral fin edge (310) of the package (116). The edge area (206a-d) is provided with a first and a second weakening element (604, 606) placed on different sides of the peripheral fin edge (310) at a first and a second transversal distance (TD1, TD2) from the peripheral fin edge (310), such that during folding of the sheet (200) into the package (116) a bulging of the packaging material (102) is guided from the peripheral fin edge (310) towards the first and second weakening element (604, 606).

## Description

### Technical Field

The invention relates to packaging technology. More particularly, it relates to a sheet of cellulose-based packaging material, a web of packaging material, a package, a method for producing the sheet and a method for producing the package.

### Background Art

Roll-fed filling machines producing carton-based packages have been known since the 40s. A well-known example available today is Tetra Pak^{®} A3 Speed marketed by Tetra Pak^{®}. The general principle of such machines is to form a tube from a web of packaging material, fill the tube with food product from above, and seal and cut the tube in a lower end such that packages are formed. In addition to providing speed, by having the packaging material sterilized and the food product treated, the packages may be able to protect the food product for an extensive period of time. By way of example, the roll-fed filling machines can be used for packing UHT (Ultra-High Temperature) treated milk in aseptic packages.

As an alternative to roll-fed filling machines, blanks-fed filling machines can be used. Unlike the roll-fed packing machines, the blanks-fed packaging machines use pre-made flat-folded sleeves of packaging material, often referred to as blanks. In such machines, after the blanks have been retrieved from a magazine, these are erected into sleeves. In a bottom forming station, the sleeves are folded and sealed such that bottoms are formed. Downstream this station, in a filling station, the food product is filled into the sleeves provided with bottoms. Once the food product is filled into the packages, top sections are formed by a top forming station. An example of such blanks-fed filling machine is Tetra Pak^{®} TR/27 producing Tetra Rex^{®} packages.

To ensure that the packages can be folded in a consistent and reliable manner, crease lines may be provided in the packaging material. Most often, the crease lines are formed such that the sections in the packaging material are deformed between male and female moulds such that a carton-layer of the packaging material in these sections is weakened. An effect of having the carton-layer weakened is that the folding can be guided to the sections with the deformed carton-layer.

Different techniques for forming the crease lines have been developed. For instance, in WO2015/193358A1 by Tetra Laval Holdings & Finance S.A., it is suggested an approach on how the crease lines can be provided in corner areas of packages. In WO 2009/131496A1 it is disclosed how inside creasing on a packaging laminate can be used for reducing a risk that an Aluminum foil layer cracks during folding. In US 4,287,247 it is also presented a packaging laminate provided with crease lines that can reduce the risk of cracks or leakages caused by the folding. EP 0 027 668 is also disclosing a packaging laminate provided with crease lines arranged to address the problem of cracks caused during folding, in particular cracks occurring in an intersection between transversal and longitudinal sealings.

Even though the packaging material of today provides that packages can be formed in a reliable and consistent manner, there is room for improvement. For instance, there is a desire for a packaging material that can be folded easily into packages, while a risk of insufficient sealing in peripheral edges of transversal sealings, that is, top fins and bottom fins, can be kept low. The packaging material may be folded, for instance, about 180 degrees. That may lead to buckling of the cellulose-based (e.g. carton) layer, in other words becoming wavy of the cellulose-based layer. The buckling may lead such sealing insufficiencies.

### Summary

It is an object of the invention to at least partly overcome one or more of the above-identified limitations of the prior art. In particular, it is an object to reduce the risk of insufficient sealing in peripheral fin edges.

According to a first aspect it is provided a sheet of packaging material arranged to be a package for holding a food product. The packaging material may comprise an outer protective layer arranged to face a surrounding environment, a cellulose-based layer, and an inner protective layer for preventing contact between the food product and the cellulose-based layer. The sheet may comprise at least one sealing section arranged to be formed into a fin of the package. The sealing section may comprise an edge area arranged to be formed into a peripheral fin edge of the package. The edge area may be provided with a first and a second weakening element placed on different sides of the peripheral fin edge at a first and a second transversal distance from the peripheral fin edge, respectively.

An advantage of having the first and second weakening element is that material pushed towards the peripheral fin edge during folding is pushed out in the form of bulges at the first and second weakening element, respectively, instead of bulging at the peripheral fin edge. By having the material moved away from the peripheral fin edge in this manner provides for that the more reliable sealing can be obtained in the peripheral fin edge. Thus, a bulge (including at least a part of the cellulose-based layer) will not be located in between the inner protective layers facing each other during the folding, and so they can be sealed to each other as avoiding any unsealed channel formation in between the facing and sealed inner protective layers.

The package may be formed by folding the packaging material, like a parallelepiped, or without folding, like a pouch type package. The essential feature is having a sealing section to be able to seal the package before and/or after the food product has been filled.

The cellulose-based layer may provide robustness to the sheet and the package. It may be a paper layer, particularly a paperboard layer known in liquid food packaging field.

The inner and outer protective layers may be layers known in the field to protect the cellulose based layer against wetting, such as polymer layers, extruded or laminated on one or both sides of the cellulose-based layer. The number of protective layers may be one or more according to desired protection for the package.

The packaging material may comprise further layers other than the protective layers and cellulose-based layer.

A folding area between the first and second weakening element may be void of a weakening element, in other terms the folding area between the first and second weakening element may be formed without having any weakening element.

By not having any weakening element at the peripheral fin edge comes with the positive effect that the risk of ruptures in the packaging material, especially the "inner" layers located on the side of the cellulose-based layer facing the food product when the package is formed and filled, due to bulging effect of the weakening element located on the fin edge can be reduced.

The avoided further weakening element may be any weakening in any direction, for instance a linear creasing in longitudinal or transversal direction.

The folding area may be defined as not only the area between the existence of the first and second weakening elements, but also may be in between the projections, especially longitudinal projections (hypothetical continuation) of the first and second weakening elements. In this situation, the packaging material may be lack of transversal creasing, that may exist in the periphery of the first and second weakening elements for some type of packages, in the folding area.

The weakening element mentioned in this application may be at least one of a slit, a hole, a creasing, or a compression. The compression may be formed by forming a recess on the sheet. The recess may be not causing any raise on the other side of the sheet.

All the weakening types may be applied on the cellulose-based layer itself only, or on any step of the lamination process and on any layer existing on the cellulose-based layer. At the end of any alternative, it is valuable to have the effect of the weakening element on the cellulose-based layer.

The first and second weakening elements, for instance as a creasing, may be provided by a female and a male die. Thus, the converting process for the packaging material may be facilitated compared to other type of weakening formation processes in the field. The cross section of the moulds may be symmetric, like a U shape, or asymmetric, like explained later. The creasing may have recessed section on a face of the sheet and protruded section on the other face of the sheet.

The first and second weakening elements may be connected to or separated from any top flap crease line and any bottom flap crease line that may exist, if the packaging material will be folded to form a package. By making into connected or spaced apart, different designs may be achieved with the first and second weakening elements and top flap crease line and the bottom flap crease line as long as the design is covered the scope of the claims and technically possible in the field.The at least one sealing section may comprise a top sealing section and a bottom sealing section, wherein the top sealing section may comprise a first and a second top fin edge area and the bottom sealing section may comprise a first and a second bottom fin edge area.

The packaging material may further comprise a barrier layer placed between the cellulose-based layer and the inner protective layer.

The barrier layer may be more sensitive to stress and strain than the cellulose-based layer and/or the protective layers. For this reason, having the first and second weakening element may be particularly relevant if the packaging material comprises the barrier layer.

The barrier layer may be used to avoid spoilage of the food stored in the package. For instance, it may be an oxygen and/or light barrier layer. It may be one or more layers having the same or different barrier properties.

In a possible example, the barrier layer may be a fiber-based barrier layer (for instance a paper-based barrier layer). The fiber-based barrier layer has a paper base layer, provided with a coating layer having barrier properties and coated to the paper base layer. The paper base layer may be coated with an aqueous dispersion coating method, with a dispersion or solution of a composition capable of providing barrier to oxygen gas, water vapor and/or further migratory substances. Examples of such compositions are aqueous compositions comprising vinyl alcohol polymers or starch or other polysaccharides, optionally further comprising a filler or a laminar mineral compound, such as talcum or bentonite or other clay minerals. Alternatively, or also, the paper substrate layer may be coated by a vapor deposition method, such as chemical vapor deposition and/or physical vapor deposition and may in a preferred embodiment be metalized, e.g., deposition-coated with a merely nano-meter thick coating of metal, such as aluminum.

In another possible example, the barrier layer may be a polymer-based barrier layer. The polymer-based barrier layer may comprise a single polymer layer having inherent gas barrier properties; or a layer having a polymer base layer, with a coating layer having barrier properties and coated onto the polymer base layer. The polymer base layer may be pre-manufactured film, having a single or multilayer structure, which is further coated by deposition methods like chemical vapor deposition and/or physical vapor deposition in the same way as described above regarding the fiber-based barrier substrate, e.g. such a polymer barrier substrate may be metalized and/or deposition coated with an inorganic oxide, such as with a metal oxide. Such polymer-based barrier layers have also been seen to be difficult to punch or penetrate, thus requiring specific and powerful equipment.

This type of fibre-based or polymer-based barrier layers are seen to be beneficial especially on recycling cycle of the packages formed by the packaging materials as claimed.

A distance between the first and second weakening elements may be 1-6 mm. The distance may be defined in relation to the thickness of the sheet, or the thickness of the cellulose-based layer. In a probable embodiment, the distance may be about 2 mm for a package having an inner volume about 50-500 ml, or may be about 2.2 mm for a package having an inner volume about 500-2000 ml. The weakening elements may be apart from each other between 5 and 20 times the thickness of the cellulose-based layer. Thus, the risk of having a bulge, and so a sealing problem, may be avoided.

The first and second weakening elements have an outer slope angle that is steeper than an inner slope angle; or an inner slope angle that is steeper than an outer slope angle. An advantage with having the first and second weakening elements asymmetric is that the packaging material may be subjected to less stress and strain at the same time as the risk of having a bulge occurring in the peripheral fin edge can be kept low.

According to a second aspect it is provided a web of packaging material comprising a number of sheets trailing after one another, wherein said sheets are arranged according to the first aspect. Thus, a continues roll of packaging materials can be converted or produced in an efficient manner. There may be also further sheets beneath to each other to form a multilane continues roll packaging material. That may make the production even more efficient. The production of the packaging material may be performed with material flowing speed of 200 m/min or faster. Thus, a continues and a mass production of packaging material can be achieved.

The packaging material may be transformed to a package in a filling machine for forming packages from sheets according to the first aspect. The filling machine may comprise a transversal sealing station arranged to form the sealing section into the fin of the package by folding the edge area of the sheet into the peripheral fin edge and thereafter sealing the sealing section into the fin. The filling machine may be a roll-fed filling machine in which the sheet is provided in the form of the web according to the second aspect. Thus, a continues filling and package forming can be achieved. The transversal sealing station may use induction heating or ultrasonic heating for melting the inner protective layer of the sheet. Thus, different type of lamination layers, for instance barrier layers may be employed for the packaging material while keeping the sealing still possible.

According to a third aspect, it is provided a method for producing a sheet of packaging material. The method may comprise attaching an outer and an inner protective layer onto a cellulose-based layer, and deforming the cellulose-based layer such that a first and a second weakening element are formed in an edge area of the sheet, wherein the first and second weakening element may be placed on different sides of a peripheral fin edge at a first and a second transversal distance from the peripheral fin edge, respectively.

The same features and advantages as presented above with respect to the first aspect also apply to this aspect.

According to a fourth aspect a method for producing a package from a sheet of packaging material is provided. An edge area of the sheet may be provided with a first and a second weakening element placed on different sides of a peripheral fin edge at a first and a second transversal distance from the peripheral fin edge, respectively. The method may comprise providing the sheet, and folding and sealing the sheet such that a fin is formed, wherein the first and second weakening element provide for that a bulging of the packaging material is guided from the peripheral fin edge towards the first and second weakening elements, respectively.

The same features and advantages as presented above with respect to the first aspect also apply to this aspect.

According to a fifth aspect a package obtainable by a method according to the fourth aspect is provided.

Still other objectives, features, aspects and advantages of the invention will appear from the following detailed description as well as from the drawings.

All terms like transversal and longitudinal are referring to the packaging material production where flow direction of a rolled cellulose-based layer and/or sheet defines the longitudinal direction, and the direction crossing the longitudinal direction with a normal degree defines the transversal direction. All terms like top or bottom refers to the package to be formed from the packaging material such that upper section of the package while, if suitable, standing on a surface is the top section and the lower section staying on the surface is the bottom section; or the section where the food product is filled in package is the top section while the sealed section on the other side of the package is the bottom section. In any case, the directional or relative terms used are the ones being well-known by a skilled person in the field of food packaging.

### Brief Description of the Drawings

Embodiments of the invention will now be described, by way of example, with reference to the accompanying schematic drawings, in which
Fig. 1 is a perspective view of a roll-fed filling machine.
Fig. 2 illustrates a sheet of a web of packaging material not showing the invention.
Fig. 3 is a perspective view of a package formed from the sheet illustrated in fig. 2.
Fig. 4 is a general illustration of how bulging can occur during folding of the sheet according to the prior art.
Fig. 5 is a cross-sectional view of the peripheral fin edge of the package, wherein a bulge is formed due to the folding of the sheet according to the prior art.
Fig. 6 is a general illustration of how a first and a second weakening element can mitigate the forming of a bulge in a folding line.
Fig. 7 is a cross-sectional view of the peripheral fin edge with the first and second weakening elements provided such that a first and a second offset edge bulge are formed.
Fig. 8 illustrates a crease line pattern suitable for the package type in Fig. 2 comprising the first and second weakening elements.
Fig. 9 illustrates a cross-sectional view of a tool that can be used for providing the first and second weakening elements.
Fig. 10 is a flowchart illustrating a method for producing a sheet of packaging material.
Fig. 11 is a flowchart illustrating a method for a package from the sheet of packaging material.

### Detailed Description

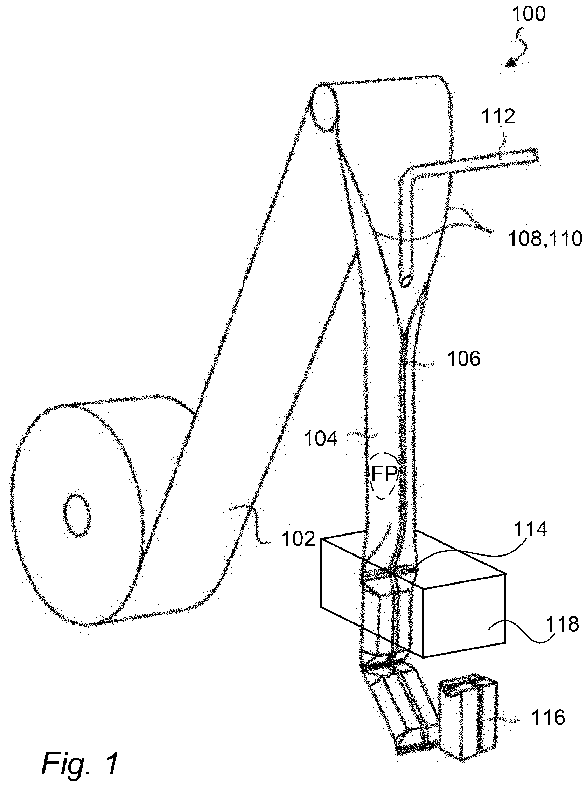

Fig. 1 illustrates the general principle of a roll-fed filling machine 100. Packaging material 102 can be provided in the form of a web rolled up on a reel. After the web is rolled off the reel, this can be sterilized (not illustrated), e.g. by using a hydrogen peroxide bath or a low-voltage electron beam (LVEB) station. In addition to being sterilized, that is, killing off unwanted microorganisms from the packaging material 102, opening devices may be molded onto the packaging material 102, sometimes referred to as pre-mounted or pre-applied opening devices (also not illustrated). The web can be formed into a tube 104 by forming a longitudinal sealing 106. This sealing can be provided by guiding the web such that a first longitudinal edge 108 of the web overlaps a second longitudinal edge 110, generating heat such that outer and inner protective layers of the packaging material 102 at least partly melt, and applying a pressure such that a bonding occurs between the two edges 108, 110. As illustrated, the forming of the longitudinal sealing 106 may be made continuously. Even though not illustrated, a so-called LS strip (Longitudinal Sealing strip) may be applied onto an inside of the tube 104 such that contact between food product FP inside the tube 104 and a cellulose-based layer of the packaging material 102 can be prevented.

The food product FP can be provided from above into the tube 104 via a food product pipe 112. In a lower end of the tube 104, transversal sealings 114 may be formed. At the same time as transversal sealings 114 are made, the tube 104 can be cut off. In this way, a top fin of a first package and a bottom fin of a second package, wherein the second package is trailing the first package, can be provided at the same time. The transversal sealing and cutting can be made in a transversal sealing station 118, herein generally illustrated as a box. To generate heat during the sealing, induction heating may be used. Another option is to use ultrasonic waves for generating the heat. Downstream the transversal sealing station 118, packages 116 can be folded into their final shape. For instance, panels and flaps may be formed by a final folder such that brick-shaped packages can be produced.

Instead of having the packages produced with the tops pointing upwards and the bottoms pointing downwards, it is also possible to have the packages produced in opposite direction, that is, with the tops pointing downwards and the bottom pointing upwards.

Even though the roll-fed filling machine 100 is illustrated, there is also other ways for producing the packages 116. For instance, so-called blanks-fed machines may be used. In these machines, most often, the longitudinal sealing 106 as well as the cutting are pre-made, that is, not made in the filling machine. The packaging material is thus provided in the form of blanks, that is, flat-folded sleeves of packaging material. Unlike in the roll-fed filling machine 100, the top and the bottom of the packages are formed at different stations.

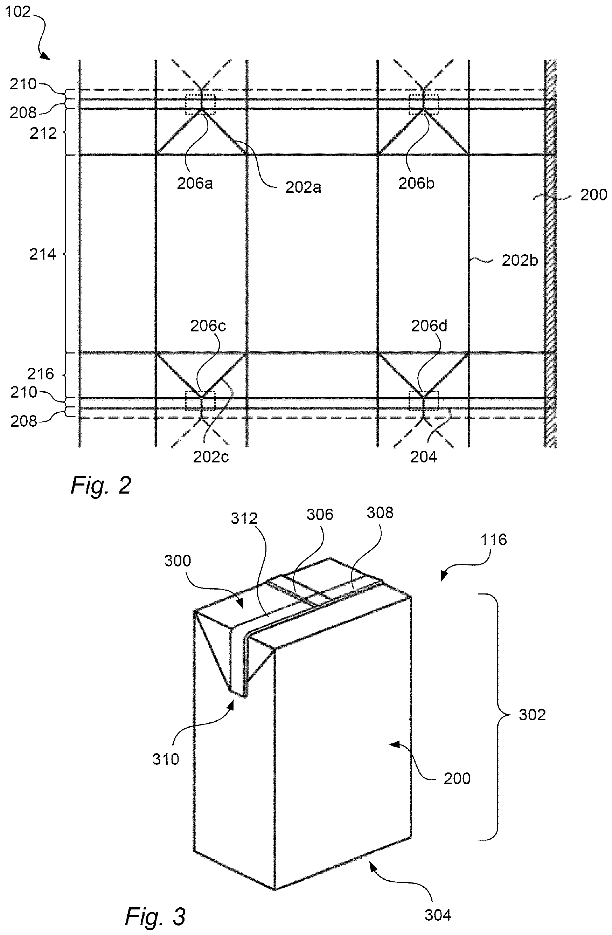

Fig. 2 illustrates the packaging material 102 more in detail. As illustrated, the web of packaging material 102 may be divided into sheets 200, wherein one sheet 200 gives rise to one package 116. If using the blanks-fed filling machine instead of the roll-fed filling machine 100, the sheet 200 can be longitudinally sealed and folded flat.

Crease lines 202 can be provided such that folding of the sheet 200 into the package 116 can be facilitated. The packaging material 200 may be a carton-based packaging material, more particularly a laminate comprising a polymer-based outer protective layer for hindering moisture to reach a carton-based layer placed inside this outer protective layer. The carton-based layer, or more generally a cellulose-based layer, serves the purpose of providing robustness, but also reduces the environmental impact of the package 116. Since carton may deteriorate over time if being in contact with a liquid, such as the food product FP, the inner protective layer may be provided such that the food product FP held inside the package 116 is hindered from being in direct contact with the carton-based layer. Most often, not only one inner protective layer is being used, but a plurality of layers is being used, and in the same manner several outer protective layers may be used. A barrier layer may be added to block light from reaching the food product FP held inside the package 116. If using the carton-based packaging material 200 described above, the crease lines 202 can be provided by deforming the carton at the crease lines 202. By deforming the carton, fibers are damaged, which results in that these sections are weakened, thereby facilitating folding.

The sheet 200 illustrated in fig. 2 is an example of a sheet to be formed into a block-shaped package 116. A top flap crease line 202a is provided to facilitate the forming of top flaps that are to be folded down and glued onto side panels of the package 116. Further, longitudinal main section crease lines 202b may be provided to facilitate the forming of front panel, side panels and rear panels. A bottom flap crease line 202c may be provided for the forming of bottom flaps. A cutting line 204 can be provided between edge areas 206a-d of consecutive sheets 200.

As illustrated, a top sealing section 208 can be provided in an upper part of the sheet 200 and on the other side of the cutting line 204, next to the top sealing section 208, a bottom sealing section 210 of a trailing sheet can be provided. Below the top sealing section 208, a top section 212 can be provided. Further down, a main section 214 can be provided. Even further down, a bottom section 216 can be provided. Next to the bottom section 216, the bottom sealing section 210 can be provided.

Fig. 3 illustrates by way of example the package 116 that can be formed from the sheet 200 illustrated in fig. 2. More particularly, a top 300 can be formed from the top section 212, a main body 302 can be formed from the main section 214 and a bottom 304 can be formed from the bottom section 216. A longitudinal sealing 306 can be provided between two rear panels of the package 116. Another option, even though not illustrated, is to have the longitudinal sealing placed in a corner area between the rear panel and one of the side panels. A transversal sealing 308 having two peripheral fin edges 310 may be provided such that a fin 312 is formed. Even though not illustrated, in addition to the fin 312 illustrated, that is, a top fin, a bottom fin may also be provided. However, instead of having flaps folded down onto the side panels, the flaps of the bottom fin may be folded inwards.

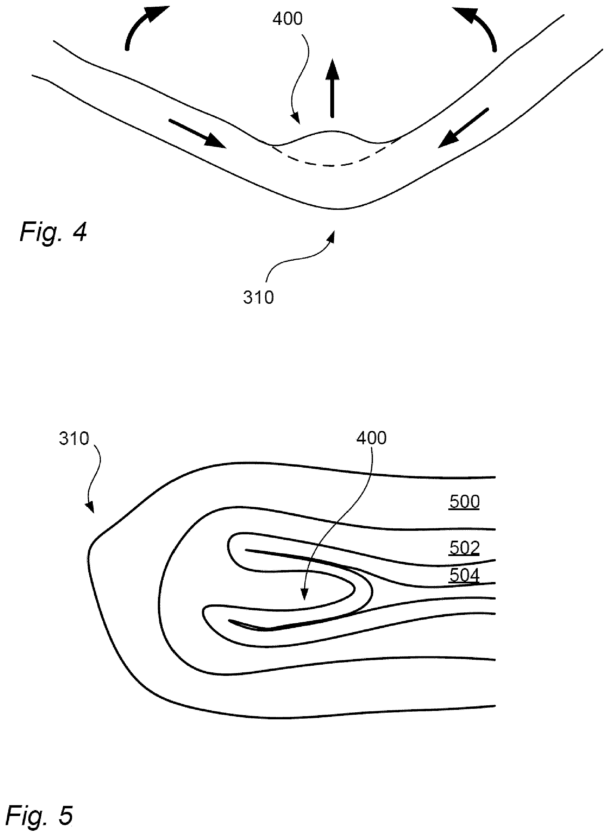

A problem that may occur when folding the packaging material 102 such that the peripheral fin edge 310 is formed is that a bulge 400 is formed on an inside of the packaging material 102 as illustrated in fig. 4. When the two sides of the packaging material 102 are folded towards one another, as illustrated by arrows, material of the packaging material 102 is moved towards a folding line, that is, the peripheral fin edge 310, also illustrated by arrows. As an effect of that material is pushed towards a folding centre, the material is pushed out in the form of the bulge 400. The bulge 400 may occur if there is no crease line provided, as illustrated. In case there is a crease line provided for facilitating the folding, this may further increase a risk of having the bulge 400 formed. The effect of the crease line may namely be that the section of the packaging material 102 at the peripheral fin edge 310 is weakened, thereby increasing the risk for that the material is pushed out in the form of the bulge 400. An implication of the bulge 400 is that the transversal sealing 308 is negatively affected, which in turn may result in insufficient package integrity.

Fig. 5 illustrates an example of the peripheral fin edge 310 in which the bulge 400 is formed. In this particular example, the packaging material comprises an outer protective layer 500, a cellulose-based layer 502, more particularly a carton-based layer, and an inner protective layer 504. As illustrated, the cellulose-based layer 502 may give rise to the bulge 400. One reason for this is that the cellulose-based layer 502 is constituted in a different way than the outer and inner protective layers 500, 504, in this particular example being polymer-based.

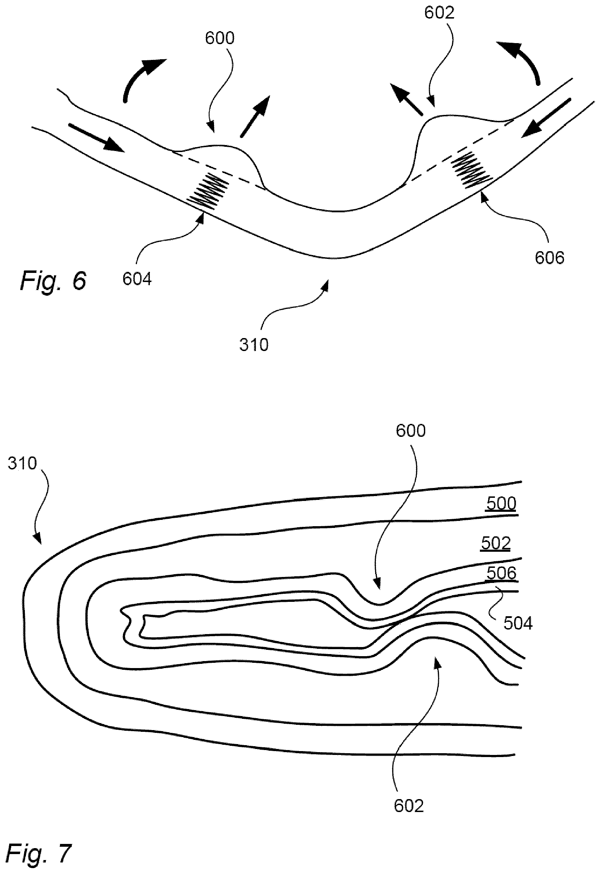

As illustrated in fig. 6, by having a first and a second weakening element 604, 606 placed on either side of the peripheral fin edge 310, that is, the folding centre, the material pushed towards the folding centre meets sections in the packaging material 102 that has been deformed, that is, fibres has been damaged. As an effect of the weakening of the packaging material 102, the material being pushed towards the folding centre is redirected towards an inside of the transversal sealing 308 and as an effect a first and a second offset edge bulge 600, 602 are formed. Thus, by having the first and second weakening elements 604, 606, less material is pushed towards the peripheral fin edge 310. A positive effect of this is that stress and shear forces in the peripheral fin edge 310 can be reduced, thereby reducing the risk of packaging material breakage. In addition, by having less material pushed into the peripheral fin edge 310, a more robust and reliable transversal sealing can be achieved.

Fig. 7 illustrates an example of the peripheral fin edge 310 when the packaging material 102 being used is provided with the first and second weakening elements 604, 606. Unlike the packaging material 102 illustrated in fig. 5, the packaging material 102 in this example comprises the outer protective layer 500, the cellulose-based layer 502, a barrier layer 506 and the inner protective layer 504. Even though the principle of using the first and second weakening elements 604, 606 for providing the first and second offset edge bulges 600, 602 is also applicable for the packaging material 102 illustrated in fig. 5, the principle may be even more relevant for the packaging material 102 comprising the Aluminium foil layer as the barrier layer since this may be more prone to break due to stress or strain forces than e.g. the outer and inner protective layers 500, 504.

When the inventors tested to seal packages with 1000 ml volume having an aluminium foil barrier layer in a product filling machine for both a reference packaging material like in Fig 4 and a packaging material according to the invention like in Fig. 6 in January 2023, it was seen that the problem of bulging on the fin edge was seen on the invention about 37 percent less than the reference packaging material (Table 1).

**Table 1**

| | Reference | The invention |
|---|---|---|
| Bulging | % 47.4 | % 10.0 |

A similar test was also performed in April 2023 for a package having 200 ml volume having a fibre-based barrier layer. The result was again showing a concrete decrease on the issue like no bulging on the invention packaging material but the reference with %12.5 (Table 2).

**Table 2**

| | Reference | The invention |
|---|---|---|
| Bulging | % 12.5 | % 0.0 |

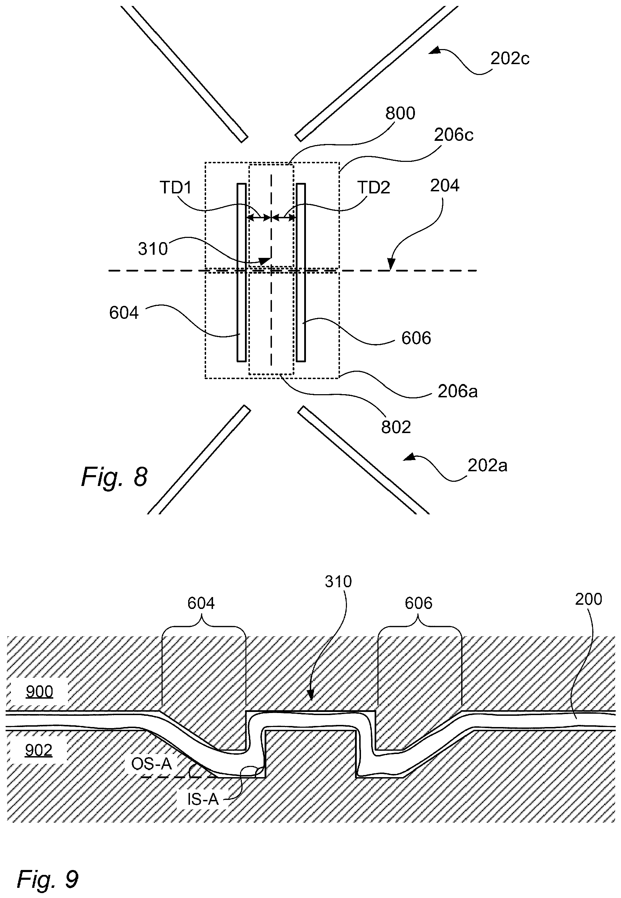

Fig. 8 illustrates a crease line pattern that can be used for providing the first and second weakening elements 604, 606. As illustrated, unlike the crease line pattern of the sheet 200 illustrated in fig. 2, the crease line pattern illustrated in fig. 8 comprises the first and second weakening elements 604, 606 in the first bottom fin edge area 206c of one sheet, and the first top fin edge area 206a of another trailing sheet. In the first bottom fin edge area 206c, a first folding area 800 can be provided. In the first top fin edge area 206a, a second folding area 802 can be provided. As illustrated, the first and second folding areas 800, 802 may be void of crease lines. By leaving out the crease lines in these areas, a risk of damaging the packaging material 102 can be lowered.

The first weakening element 604 may be placed at a first transversal distance TD1 from the peripheral fin edge 310, and the second weakening element 606 may be placed at a second transversal distance TD2 from the peripheral fin edge 310. Put differently, the first and second weakening elements 604, 606 and the top flap crease line 202a and the bottom flap crease line 202c may be spaced apart, respectively.

As illustrated in fig. 9, the first and second weakening elements 604, 606 may be provided in the packaging material 200 by using a tool comprising a female and male die 900, 902. As illustrated, an outer slope angle OS-A and an inner slope angle IS-A may be different. More particularly, the inner slope angle IS-A may be steeper than the outer slope angle OS-A. Alternative is also possible. That means the outer slope angle OS-A may be steeper than the inner slope angle IS-A (Not illustrated).

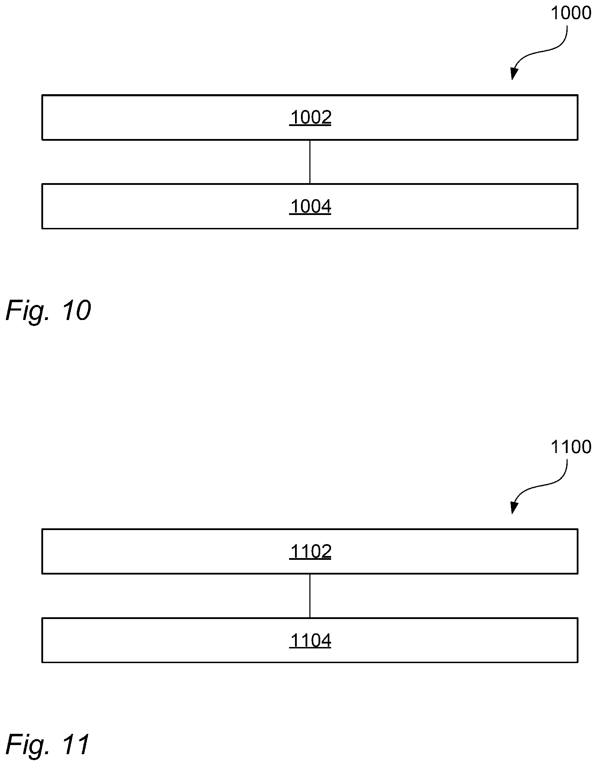

Fig. 10 is a flowchart illustrating a method 1000 for producing the sheet 200 of packaging material 102. The method comprises attaching 1002 the outer and the inner protective layer 500, 504 onto the cellulose-based layer 502, and deforming 1004 the cellulose-based layer 502 such that the first and the second weakening element 604, 606 are formed in the edge area 206a-d of the sheet 200. The first and second weakening element 604, 606 may be placed on different sides of the peripheral fin edge 310 at the first and the second transversal distance TD1, TD2 from the peripheral fin edge 310, respectively.

Fig. 11 illustrates a method 1100 for producing the package 116 from the sheet 200 of packaging material 102, wherein the edge area 206a-d of the sheet 200 is provided with the first and the second weakening element 604, 606 placed on different sides of a peripheral fin edge 310 at the first and the second transversal distance TD1, TD2 from the peripheral fin edge 310, respectively. The method may comprise providing 1102 the sheet 200, folding and sealing 1104 the sheet 200 such that the fin 312 is formed, wherein the first and second weakening element 604 606 provide for that a bulging of the packaging material 102 is guided from the peripheral fin edge 310 towards the first and second weakening elements 604, 606, respectively.

The problems of cracks in Aluminum foil or other layers of the packaging material with low extensibility have been mitigated in known solutions by adding crease lines to reduce stress in the packaging material, thereby reducing the risk of cracks and insufficient package integrity caused by these cracks. For instance, to reduce the stress on low extensibility layers of the packaging material, it is known to add crease lines to handle an intersection of the package in which the longitudinal and transversal sealing meets.

As described above, by the approach suggested herein, the first and second weakening element 604, 606 serve the purpose of providing for that material is moved from the peripheral fin edge 310 such that a risk that excessive material, e.g. material from an inner protective layer of the packaging material, may form the bulge 400 such that the sealing quality suffers. For instance, by having the excessive material in the peripheral fin edge 310, as illustrated in fig. 5, there is a risk that there is an insufficient sealing, in turn resulting in leaking packages or packages that cannot shield off the food product held in the packages from the surrounding environment due to the insufficient sealing.

From the description above follows that, although various embodiments of the invention have been described and shown, the invention is not restricted thereto, but may also be embodied in other ways within the scope of the subject-matter defined in the following claims.

## Claims

1. A sheet (200) of packaging material (102) arranged to be a package (116) for holding a food product (FP), said packaging material (102) comprising an outer protective layer (500) arranged to face a surrounding environment, a cellulose-based layer (502), and an inner protective layer (504) for preventing contact between the food product (FP) and the cellulose-based layer (502), said sheet (200) comprising
at least one sealing section (208, 210) arranged to be formed into a fin (312) of the package (116), wherein the sealing section (208, 210) comprises an edge area (206a-d) arranged to be formed into a peripheral fin edge (310) of the package (116), wherein the peripheral fin edge (310) is formed by folding the different sides towards one another and sealing the different sides together such that the fin (312) is formed,
wherein the edge area (206a-d) is provided with a first and a second weakening element (604, 606) placed on different sides of the peripheral fin edge (310) at a first and a second transversal distance (TD1, TD2) from the peripheral fin edge (310) such that material of the sheet (200) is pushed away from the peripheral fin edge (310) during folding, thereby providing for that a more reliable sealing is obtained in the peripheral fin edge (310).

2. The sheet (200) according to claim 1, wherein a folding area (800, 802) between the first and second weakening element (604, 606) is void of a weakening element.

3. The sheet (200) according to any one of the preceding claims, wherein the weakening element (604, 606) is at least one of a slit, a hole, a creasing or a compression.

4. The sheet (200) according to any one of the preceding claims, wherein the at least one sealing section (208, 210) comprises a top sealing section (208) and a bottom sealing section (210), wherein the top sealing section (208) comprises a first and a second top fin edge area (206a, 206b) and the bottom sealing section (210) comprises a first and a second bottom fin edge area (206c, 206d).

5. The sheet (200) according to any one of the preceding claims, wherein the packaging material (102) further comprises a barrier layer (506) placed between the cellulose-based layer (502) and the inner protective layer (504).

6. The sheet (200) according to any one of the preceding claims, wherein a distance between the first and second weakening element (604, 606) is 1-6 mm.

7. The sheet (200) according to any one of the claims 1-2 or 4-6, wherein the first and second weakening element (604, 606) are provided by using a tool, comprising a female die (900) and a male die (902), having an outer slope angle (OS-A) that is steeper than an inner slope angle (IS-A).

8. The sheet (200) according to any one of the claims 1-2 or 4-6, wherein the first and second weakening element (604, 606) are provided by using a tool, comprising a female die (900) and a male die (902), having an inner slope angle (IS-A) that is steeper than an outer slope angle (OS-A).

9. A web of packaging material (102) comprising a number of sheets (200) trailing after one another, wherein said sheets (200) are arranged according to any one of the preceding claims.

10. A method (1000) for producing a sheet (200) of packaging material (102), said method comprising
attaching (1002) an outer and an inner protective layer (500, 504) onto a cellulose-based layer (502), and
deforming (1004) the cellulose-based layer (502) such that a first and a second weakening element (604, 606) are formed in an edge area (206a-d) of the sheet (200), wherein the first and second weakening element (604, 606) are placed on different sides of a peripheral fin edge (310) at a first and a second transversal distance (TD1, TD2) from the peripheral fin edge (310), respectively, wherein the peripheral fin edge (310) is formed by folding the different sides towards one another and sealing the different sides together such that a fin (312) is formed, such that material of the sheet (200) is pushed away from the peripheral fin edge (310) during folding, thereby providing for that a more reliable sealing is obtained in the peripheral fin edge (310).

11. A method (1100) for producing a package (116) from a sheet (200) of packaging material (102), wherein an edge area (206a-d) of the sheet (200) is provided with a first and a second weakening element (604, 606) placed on different sides of a peripheral fin edge (310) at a first and a second transversal distance (TD1, TD2) from the peripheral fin edge (310), respectively, wherein the peripheral fin edge (310) is formed by folding the different sides towards one another and sealing the different sides together such that a fin (312) is formed, said method comprising
providing (1102) the sheet (200),
folding and sealing (1104) the sheet (200) such that the fin (312) is formed,
wherein the first and second weakening element (604 606) provide for that a bulging of the packaging material (102) is guided from the peripheral fin edge (310) towards the first and second weakening element (604, 606), respectively, thereby providing for that a more reliable sealing is obtained in the peripheral fin edge (310).

12. A package (116) obtainable by a method (1100) according to claim 11.
